# EUROPEAN PATENT SPECIFICATION

(11) **EP 0 792 783 B1**
(45) Date of publication and mention of the grant of the patent: **08.08.2001**
(21) Application number: 97301278.4
(22) Date of filing: 26.02.1997
(51) Int. Cl.: B60T 13/26

(54) **Trailer park brake system**
Anhängerfeststellbremssystem
Système de freinage de stationnement pour remorques

(30) Priority: 01.03.1996 GB 9604478; 30.10.1996 GB 9622586
(43) Date of publication of application: 03.09.1997
(73) Proprietor: Pownall Security Systems Limited, Mansfield, Nottinghamshire NG21 0TA (GB)
(72) Inventor: Pownall, Colin, Unit 2 and 9, Mansfield, Nottinghamshire NG21 0TA (GB)
(74) Representative: Craske, Stephen Allan

(56) References cited:
- EP-A- 0 195 588
- DE-A- 2 720 632
- DE-A- 3 630 892

## Description

### TECHNICAL FIELD OF THE INVENTION

This invention relates to trailer park brakes.

### BACKGROUND

Modern heavy commercial vehicle trailers are equipped with air and spring operated brake systems. The trailer brake system generally provides several functions, as follows:
1. A service brake, i.e, the trailer brakes are applied as the foot brake in the prime mover (tractor unit) is applied.
2. Parking brake. A park valve is usually provided on the trailer to apply the trailer brakes by the use of springs in air spring actuators.
3. Emergency brake. Should a trailer break away from the prime mover while in motion the trailer air operated brakes must apply fully and instantly to limit damage.

When a driver un-couples a trailer he first disconnects the electrical and air couplings (known as suzies). As soon as the emergency line (generally known as a red line) is disconnected the emergency brake is applied on the trailer and because of this many drivers do not apply the parking brake by pulling out the so-called red button on the park valve.

DE 27 20 632-A discloses a trailer brake system as set forth in the pre-characterising part of Claim 1 and a trailer park valve as set forth in the pre-characterising part of Claim 5.

### SUMMARY OF THE INVENTION

The present invention proposes a trailer brake system having the features set forth in the characterising part of Claim 1.

The invention also provides a trailer park valve having the features set forth in the characterising part of Claim 5

### BRIEF DESCRIPTION OF THE DRAWINGS

The following description and the accompanying drawings referred to therein are included by way of non-limiting example in order to illustrate how the invention may be put into practice. In the drawings:
Figure 1 is a schematic diagram of a trailer braking system in accordance with the invention,
Figure 2 is a sectional drawing of a park valve incorporated in the braking system, shown in its rest position when the trailer park brakes are applied,
Figure 3 is a detail of the park valve, again shown in its rest position,
Figure 4 is a similar detail to Fig. 3 but showing the valve in the position which causes the park brakes to be released, and
Figure 5 shows an alternative park valve arrangement for use in the trailer braking system, again depicted in the rest position with the park brakes applied.

### DETAILED DESCRIPTION OF THE DRAWINGS

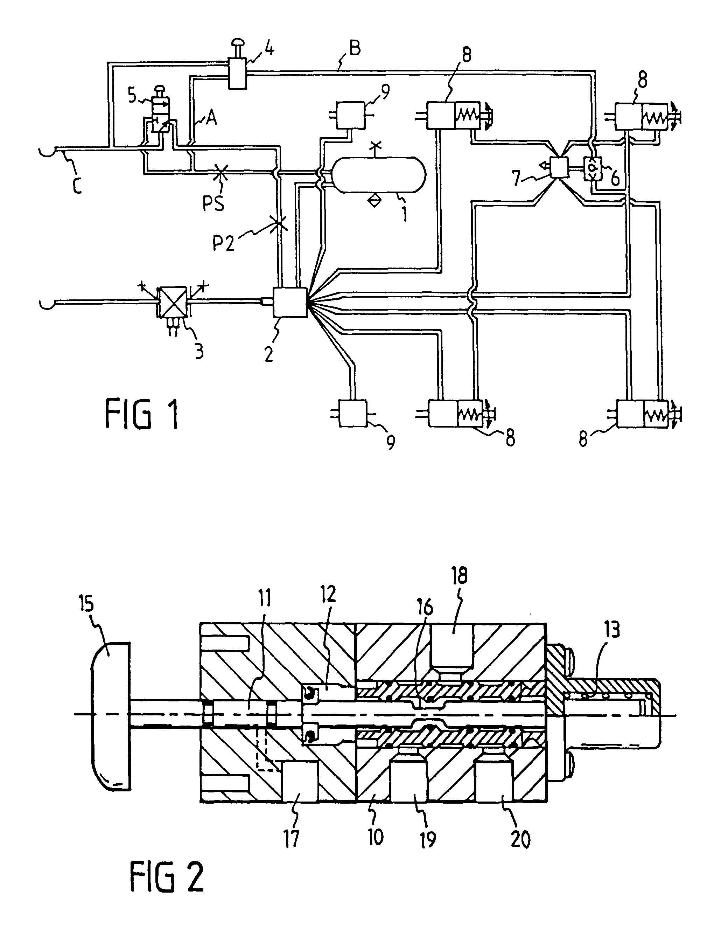

Referring firstly to Fig. 1, air is supplied to the trailer brakes from an on-board air cylinder 1 via a relay valve 2 which supplies brake cylinders 9 and spring park brake cylinders 8. Operation of the service brake in the tractor unit (not shown) supplies pressure via a load sensing valve 3 to operate the relay valve 2 and thus pressurise the brake cylinders 8 and 9. When the trailer is coupled to a tractor unit the relay valve 2 is held in its normal operating position by pressure applied via an emergency red line C and a shunt valve 5, but when the tractor is disconnected (either during normal uncoupling of the tractor-trailer or in an accident) the release of pressure in the red line C causes valve 2 to actuate the cylinders 8 and 9 from the air cylinder 1 and thus apply emergency brakes.

A park valve 4 allows pressure from the cylinder 1 to pass via lines A and B to a double check valve 6 which, when supplied with pressure, acts via a quick release valve 7 to allow normal operation of the cylinders 8. However, when line B is not pressurised the valves 6 and 7 actuate the park brakes (subject to certain other conditions being met) by means of the spring-loaded cylinders 8.

In a normal park valve 4 a so-called red button must be manually pulled out to release pressure in line B and apply the park brakes, but since the emergency brake is already applied this is not always done. When a driver re-couples the trailer for towing, as soon as the red line is connected the emergency brakes release. At this point the driver is outside the vehicle on the rear deck between the cab and trailer, and in certain circumstances this can be extremely dangerous. For example:
(a) If the driver has forgotten to apply the tractor units park brake after engaging the king pin (towing pivot coupling) when the red line is connected to the trailer the whole rig can roll away without the driver at the controls.
(b) If the driver has not correctly engaged the king pin but has applied the tractor unit park brake, when the red line is connected the trailer could roll forward crushing the driver between the rear of the cab and the front of the trailer.

Both of the above examples are real, and several drivers have been killed in such circumstances.

The forms of park valve to be described automatically apply the park brakes when the tractor is uncoupled. The park valve 4, which is shown in Fig. 2, is mounted at the side of the trailer, as with a normal park valve. The valve cylinder 10 contains a piston 11 in a bore 12. In its rest position the piston is urged leftwards (as shown) by a spring 13 acting on the right hand end of the piston 11. A "red" button 15 (which can of course be any colour) is carried on the left hand end of the piston 11. With the piston urged leftwards as shown, a port 18 coupled to line B is vented to atmosphere through a port 19 via a waisted region 16 of the piston 11. However, when the piston 11 is moved to the right, the waisted region 16 connects the port 18 with a further port 20, which is connected to cylinder 1 via line A. Thus line B is pressurised to release the park brakes.

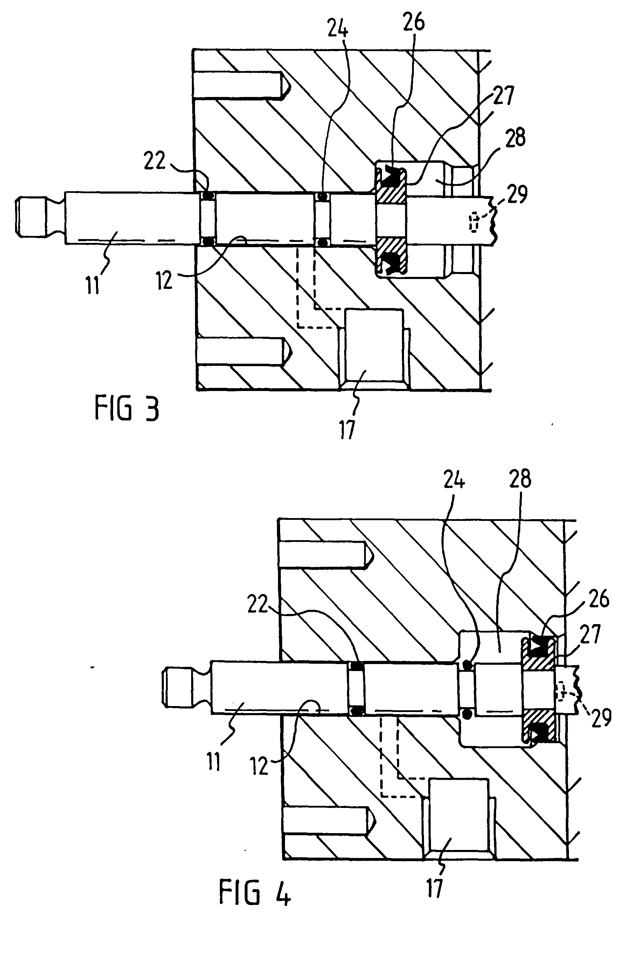

A port 17 puts the left end of the bore 12 in communication with the emergency line C (Fig. 1). When the piston 11 is extended as in Fig. 2 the pressure from the line C is restricted to a region of the bore 12 defined between two similar O-ring or other suitable seals 22 and 24, as best seen in the enlarged detail of Fig. 3. The left hand side of the first seal 22 is at atmospheric pressure. When the valve is at rest, the opposite right hand side of the second seal 24 is also at atmospheric pressure being in communication with a body vent 29, bypassing an intervening lip seal 26 carried on an annular projection 27 via an enlarged portion 28 of the bore 12. The pressure applied to the piston from the red line C is thus balanced.

When the tractor is coupled to the trailer the button 15 is manually pushed in against the action of spring 13, as in a conventional park valve. This condition is shown in Fig. 4. The port 17 again applies red line pressure in the region between seals 22 and 24, but the seal 24 is positioned within the enlarged region 28 allowing pressure into the region 28. The projection 27 is now in sealing contact with the bore 12 by means of the lip seal 26. Air pressure in the red line C thus acts on the area of the annular projection 27 to hold the piston 11 to the right, connecting lines A and B and thereby releasing the park brakes.

When the red line from the trailer is disconnected the pressure is removed from the projection 27 so that spring 13 moves the piston to the left. The button 15 therefore moves out automatically and port 18 is vented to atmosphere releasing the pressure in line B and causing the park brakes to be applied. The red button thus no longer needs to be pulled out manually to apply the park brakes, although it can of course be pulled out manually to apply the park brakes, e.g. with the tractor still connected.

It will be noted that the seals acting on the piston 11 to control communication between port 18 and ports 19 and 20 are in the form of lip seals. Whilst this form of seal is preferred to reduce the effort required to pull out the piston 11 and apply the park brakes when the red line pressure is acting on the projection 27, other forms of seal could be used.

When the trailer is re-coupled to the tractor unit and the red line is connected the driver is required to walk to the side of the trailer and push in the red button 15. The valve will then be held in by pressure from the red line C. If the tractor brakes are not applied and the unit starts to roll away the driver can immediately pull out the red button to re-apply the park brakes of the trailer.

There is no possibility of the driver being trapped between the tractor and trailer as the driver is out of the danger area when operating the red button.

If it is required to manoeuvre the trailer without the tractor unit the park valve 4 can be held in by hand and the shunt valve 5 pushed in. As will be seen in Fig. 1, operation of the shunt valve 5 connects the air cylinder 1 to the relay valve 2 to allow release of the park and service brakes. When the manoeuvring is finished, hand pressure is removed from the red button so that the park valve 4 returns to rest under the action of spring 13 and re-applies the park brakes.

Instead of connecting port 17 of the park valve directly to the red line C port 17 could instead be connected at position P2, between the shunt valve 5 and the relay valve 2. The pressure appearing at point P2 will now hold the park valve in while manoeuvring takes place. Upon completion of the shunting operation the red button must be manually pulled out or the shunt valve 5 pulled out to release the pressure at P2 so that the park valve can apply the brakes automatically under the action of spring 13.

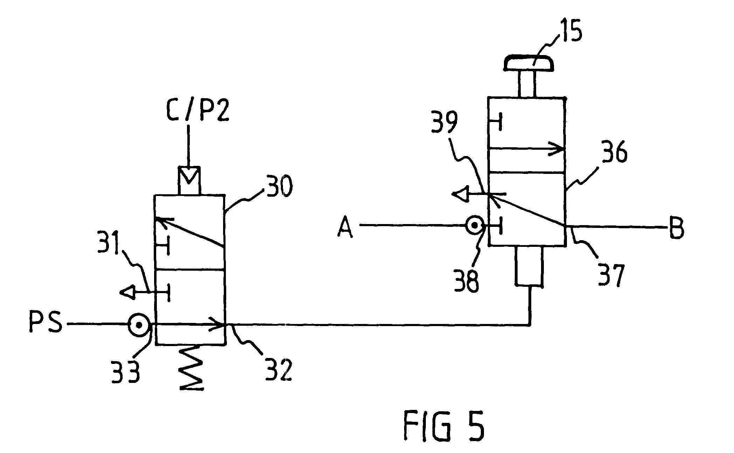

Although the use of a single purpose-made spring-operated park valve is preferred, an equivalent arrangement can be produced using standard pilot valves, as shown in Fig. 5. When the red line C is connected to a tractor, red line pressure appears at the pilot port of a pilot operated relay valve 30. This causes the valve to vent port 32 to port 31 and close off port 33 which is connected to the trailer air supply cylinder 1 at any convenient point PS (Fig. 1). Venting of port 32 removes pilot pressure from the pilot reset port of a park valve 36, allowing the driver to operate the valve 36 by manually pushing in the red button 15. This, in turn, connects line B to line A via ports 37 and 38, releasing the park brakes 8.

When the red line C is disconnected the removal of pilot pressure from the relay valve 30 causes it to change over, applying pressure from the trailer air cylinder 1 at port 33 to the pilot reset port of park valve 36. This causes the red button to be ejected and, at the same time, vents line B to atmosphere by connecting port 37 to port 39, thereby automatically applying the park brakes.

The pilot port of valve 30 is connected to point P2 (Fig. 1) between the shunt valve 5 and the relay valve 2. Thus, when there is no red line pressure, operation of the shunt valve 5 applies pilot pressure to the valve 30 so that the red button 15 can be manually pushed in to release the park brakes for manoeuvring. The red button must be manually pulled out to re-apply the park brakes on completion of manoeuvring, or the shunt valve 5 changed over again to remove the pilot pressure from the valve 30.

It will be appreciated that the park valve 4 or the equivalent arrangement of Fig. 5 could be connected in series with existing park valves. Also, some trailers are fitted with a combined park brake and shunt valve and again the park valve arrangement would be fitted in series or incorporated into new combination valves.

In order to increase security against theft of a trailer a key or combination operated lock could be incorporated into the park valve 4 or 36 to prevent depression of the red button without the appropriate key or combination. The valve 4 or 36 could alternatively be mounted in a lockable enclosure.

## Claims

1. A trailer brake system comprising:
- an emergency line (C) for receiving pressure from a tractor unit when the trailer is coupled thereto;
- a plurality of spring-operated park brake actuators (8);
- a control line (B) for supplying pressure to said park brake actuators to hold the park brakes in a released condition; and
- a manually operable park valve (4; 36);
characterised in that manual operation of said park valve (4; 36) connects said control line (B) to a pressure source (1), which in use is installed within the trailer, the park valve being arranged such that application of pressure from said emergency line (C) causes said park valve to be held in said manually operated position, but when the emergency line is disconnected, removal of emergency line pressure causes the park valve to disconnect the control line from the pressure source and vent the control line.

2. A trailer brake system according to Claim 1, in which the park valve (4; 36) is moved to the venting position by application of gas pressure thereto.

3. A trailer brake system according to Claim 2, in which removal of emergency line pressure is arranged to operate a relay valve (30) to apply said gas pressure to the park valve (36).

4. A trailer brake system according to Claim 1, in which the park valve (4) is biassed (13) to the venting position, and the valve is held off the venting position by pressure from the emergency line (C) such that the removal of said pressure causes the bias to automatically move the park valve to the venting position.

5. A trailer park valve comprising:
- a housing;
- a piston (11) slidable within the housing, said piston including a stem portion which projects from said housing;
- a button (15) mounted on said projecting stem portion;
- bias means (13) urging said piston towards an extended position, and said piston being manually moveable by said button against the action of said bias means towards a depressed position;
- a control port (17) for connection to an emergency line (C) for receiving pressure from a tractor unit when the trailer is coupled thereto, said control port being arranged to apply pressure from said emergency line to said piston to hold the piston in the depressed position against the action of said bias means;
- an outlet port (18) for connection to a plurality of spring-operated park brake actuators (8) via a control line (B); and
- a pressure port (20) for connection to a pressure source (1);
characterised in that
said valve includes a vent port (19) and said piston is arranged to connect said outlet port to said vent port when said piston is in said extended position so that in use said park brakes are applied, and, when the piston is in the depressed position, said piston connects said outlet port to said pressure port which in use releases the park brakes by pressure applied via said control line.

## Patentansprüche

1. Anhänger-Bremssystem, mit:
- einer Sicherheitsleitung (C), um von einer Zugmaschineneinheit Druck zu erhalten, wenn der Anhänger mit dieser gekoppelt ist;
- einer Vielzahl von federbetätigten Feststellbremsen-Betätigungsmitteln (8);
- einer Steuerleitung (B), um den Feststellbremsen-Betätigungsmitteln Druck zuzuführen, um die Feststellbremsen in einem gelösten Zustand zu halten; und
- einem manuell betätigbaren Feststell-Ventil (4; 36);
dadurch gekennzeichnet, daß
bei manueller Betätigung des Feststell-Ventils (4; 36) die Steuerleitung (B) mit einer Druckquelle (1) verbunden wird, die bei Gebrauch in dem Anhänger installiert ist, das Feststell-Ventil dazu ausgestaltet ist, daß durch die Zuführung von Druck von der Sicherheitsleitung (C) bewirkt wird, daß das Feststell-Ventil in der manuell betätigten Position gehalten wird, wenn aber die Sicherheitsleitung unterbrochen ist, der Abfall des Drucks von der Sicherheitsleitung bewirkt, daß das Feststell-Ventil die Steuerleitung von der Druckquelle abtrennt und die Steuerleitung belüftet wird.

2. Anhänger-Bremssystem nach Anspruch 1, bei dem das Feststell-Ventil (4; 36) bei Zuführung von Gasdruck zu dieser in die Belüftungsposition verlagert wird.

3. Anhänger-Bremssystem nach Anspruch 2, bei dem der Abfall von Druck von der Sicherheitsleitung bewirkt, daß ein Relais-Ventil (30) betätigt wird, um dem Feststell-Ventil (36) den Gasdruck zuzuführen.

4. Anhänger-Bremssystem nach Anspruch 1, bei dem das Feststell-Ventil (4) in die Belüftungsposition vorgespannt (13) ist, und das Ventil durch Druck von der Sicherheitsleitung (C) von der Belüftungsposition ferngehalten wird, so daß der Druckabfall bewirkt, daß das Feststell-Ventil durch die Vorspannung automatisch in die Belüftungsposition bewegt wird.

5. Anhänger-Feststellbremsen-Ventil, mit:
- einem Gehäuse;
- einem Kolben (11), der in dem Gehäuse verschiebbar ist, wobei der Kolben einen Schaft-Abschnitt hat, der aus dem Gehäuse vorsteht;
- einem Tastschalter (15), der an dem vorstehenden Schaft-Abschnitt angebracht ist;
- einer Vorspanneinrichtung (13), durch die der Kolben in eine herausstehende Position gedrückt wird, und der Kolben manuell durch den Tastschalter gegen die Wirkung der Vorspanneinrichtung in Richtung auf eine eingedrückte Position bewegbar ist;
- einem Steueranschluß (17) zum Anschließen einer Sicherheitsleitung (C), um von einer Zugmaschineneinheit Druck zu erhalten, wenn der Anhänger mit dieser gekoppelt ist, wobei der Steueranschluß dazu ausgestaltet ist, um Druck von der Sicherheitsleitung dem Kolben zuzuführen, um den Kolben in der eingedrückten Position gegen die Wirkung der Vorspanneinrichtung zu halten;
- einem Auslaßanschluß (18) zum Anschließen einer Vielzahl von federbetätigten Feststellbremsen-Betätigungsmitteln (8) über eine Steuerleitung (B); und
- einem Druckanschluß (20) zum Anschließen einer Druckquelle (1);
dadurch gekennzeichnet, daß
das Ventil einen Belüftungsanschluß (19) hat und der Kolben dazu ausgestaltet ist, um den Auslaßanschluß mit dem Belüftungsanschluß zu verbinden, wenn sich der Kolben in der herausstehenden Position befindet, so daß bei Gebrauch die Feststellbremsen angezogen sind, und, wenn sich der Kolben in der eingedrückten Position befindet, der Kolben den Auslaßanschluß mit dem Druckanschluß verbindet, um bei Gebrauch die Feststellbremsen durch den Druck zu lösen, der über die Steuerleitung zugeführt wird.

## Revendications

1. Système de frein pour remorque comprenant :
- une conduite de secours (C) pour recevoir une pression d'un tracteur lorsque la remorque lui est raccordée,
- une pluralité de dispositifs d'actionnement de freins de stationnement actionnés par ressorts (8) ,
- une conduite de commande (B) pour appliquer une pression auxdits dispositifs d'actionnement de freins de stationnement afin de maintenir les freins de stationnement à l'état desserré, et
- une soupape de stationnement actionnable à la main (4; 36),
caractérisé en ce que :
l'actionnement manuel de ladite soupape de stationnement (4; 36) raccorde ladite conduite de commande (B) à une source de pression (1), qui est installée en service dans la remorque, la soupape de stationnement étant agencée de sorte que l'application de pression de ladite conduite de secours (C) provoque le maintien de ladite soupape de stationnement dans ladite position actionnée manuellement, mais que, lorsque la conduite de secours est déconnectée, l'élimination de la pression de la conduite de secours provoque la déconnexion, par la soupape de stationnement, de la conduite de commande de la source de pression et laisse échapper la conduite de commande.

2. Système de frein pour remorque selon la revendication 1, dans lequel la soupape de stationnement (4; 36) est déplacée dans la position d'échappement en lui appliquant une pression de gaz.

3. Système de frein pour remorque selon la revendication 2, dans lequel l'élimination de la pression de la conduite de secours est ménagée pour actionner une soupape de relais (30) pour appliquer ladite pression de gaz à la soupape de stationnement (36).

4. Système de frein pour remorque selon la revendication 1, dans lequel la soupape de stationnement (4) est sollicitée (13) vers la position d'échappement et la soupape est maintenue hors de la position d'échappement par la pression de la conduite de secours (C) de sorte que l'élimination de ladite pression amène la sollicitation à déplacer automatiquement la soupape de stationnement vers la position d'échappement.

5. Soupape de stationnement pour remorque comprenant :
- un boîtier,
- un piston (11) qui peut coulisser à l'intérieur du boîtier, ledit piston comprenant une partie de tige qui fait saillie dudit boîtier,
- un bouton (15) monté sur ladite partie de tige saillante,
- un moyen de sollicitation (13) qui presse ledit piston vers une position en extension et ledit piston pouvant être déplacé manuellement par ledit bouton à l'encontre de l'action dudit moyen de sollicitation vers une position enfoncée,
- un orifice de commande (17) pour le raccordement à une conduite de secours (C) pour recevoir la pression d'un tracteur lorsque la remorque lui est attelée, ledit orifice de commande étant agencé pour appliquer la pression de ladite conduite de secours audit piston pour maintenir le piston en position enfoncée à l'encontre de l'action du moyen de sollicitation,
- un orifice de sortie (18) pour le raccordement d'une pluralité de dispositifs d'actionnement de freins de stationnement actionnés par ressorts (8) par le biais d'une conduite de commande (B), et
- un orifice de pression (20) pour le raccordement à une source de pression (1),
caractérisée en ce que
ladite soupape comprend un orifice d'échappement (19) et ledit piston est agencé pour raccorder ledit orifice de sortie audit orifice d'échappement lorsque ledit piston en dans ladite position d'extension de sorte qu'en service, lesdits freins de stationnement soient enclenchés et que, lorsque le piston se trouve dans la position enfoncée, ledit piston connecte ledit orifice de sortie audit orifice de pression qui, en service, desserre les freins de stationnement par la pression appliquée par le biais de ladite conduite de commande.
